# EUROPÄISCHE PATENTSCHRIFT

(11) **EP 1 529 177 B1**
(45) Veröffentlichungstag und Bekanntmachung des Hinweises auf die Patenterteilung: **16.12.2009**
(21) Anmeldenummer: 03773489.4
(22) Anmeldetag: 02.10.2003
(51) Int. Cl.: F16K 27/02, F02D 9/10

(54) **GEHÄUSEFLANSCHEINHEIT**
HOUSING FLANGE UNIT
ENSEMBLE BRIDE-BOITIER

(30) Priorität: 26.11.2002 DE 10255103
(43) Veröffentlichungstag der Anmeldung: 11.05.2005
(73) Patentinhaber: Continental Automotive GmbH, 30165 Hannover (DE)
(72) Erfinder: ANSCHICKS, Rolf, 35510 Butzbach (DE); SCHRÖDER, Lothar, 61184 Karben (DE)
(86) Internationale Anmeldenummer: PCT/DE2003/003289
(87) Internationale Veröffentlichungsnummer: WO 2004/048829

(56) Entgegenhaltungen:
- EP-A- 0 716 222
- DE-A- 3 707 904
- DE-A- 4 401 747
- DE-C- 3 811 266
- US-A- 5 401 001
- US-A- 5 609 184
- [Online] Gefunden im Internet: URL:http://www.myshk.com/ikz-praxis/p0011/ 001108.php>

## Beschreibung

Die Erfindung bezieht sich auf eine Verschlusseinheit für Abgas eines Kraftfahrzeuges mit einer Gehäuseflanscheinheit, die aus einem Gehäuseflansch besteht, in dem senkrecht zur Längsachse des Gehäuseflansches eine Klappenwelle mit einer mittig angeordneten Klappe in einem ersten Lager und einem zweiten Lager drehbar gelagert ist. Die Erfindung bezieht sich ferner auf eine Verwendung der Gehäuseflanscheinheit.

Solche Verschlusseinheiten sind bekannt. Sie werden von Abgasen durchströmt und sind mehrteilig aufgebaut. Die auf der Klappenwelle angeordnete Klappe dient dabei dem Verschließen von Rohrleitungseinheiten. Gerade bei Abgasen ist es dabei gewünscht, dass die Gase nicht über die Lager der Klappenwelle ins Freie gelangen können, besonders dann, wenn die Gase Schadstoffe enthalten. Diese Möglichkeit ist dadurch gegeben, dass die Klappenwelle in der Regel von außen angetrieben wird und eine entsprechende Abdichtung durch Dichtungsringe in Folge hoher Temperaturen, denen die Gehäuseflanscheinheit meistens ausgesetzt ist, nicht wirkungsvoll realisiert werden kann. Der Gehäuseflansch einer solchen Gehäuseflanscheinheit wird bei Betriebstemperaturen über 450° C in der Regel aus Grauguss hergestellt, wobei Wanddicken im Bereich von 4,5 bis 5,5 mm vorgesehen sind. Dabei ist nachteilig, dass die Gehäuseflanscheinheit ein relativ hohes Gewicht aufweist.

Eine Gehäuseflanscheinheit der vorstehend genannten Art ist aus der US-A-5401001 bekannt. Absperrklappen sind aus dem Heizungsbau auch in Ausführungen aus Rotguss bekannt.

Der Erfindung liegt daher die Aufgabe zugrunde, eine Verschlusseinheit mit einer Gehäuseflanscheinheit zu schaffen, die ein relativ niedriges Gewicht und gleichzeitig eine hohe Korrosionsbeständigkeit aufweist.

Die der Erfindung zugrundeliegende Aufgabe wird dadurch gelöst, dass die Gehäuseflanscheinheit aus Rotguss besteht und eine Wanddicke g von 2 bis 4 mm aufweist. Unter der Bezeichnung Rotguss ist dabei eine Kupfer-Zinn-Legierung (Bronzen) zu verstehen, bei denen ein Teil des Zinns in der Regel durch 1 bis 6 % Zink ersetzt wird. Es hat sich in überraschender Weise gezeigt, dass auf diese Weise das Gewicht der Gehäuseflanscheinheit um nahezu 35 % reduziert werden kann, wobei gleichzeitig eine hohe Korrosionsbeständigkeit, besonders im Hinblick auf schweflige oder Schwefelsäure, gewährleistet ist.

Ferner ist gewünscht, einen Teil der Abgase auf höherer Temperatur zu halten. Die Aufteilung des Abgasstromes lässt sich durch die Gehäuseflanscheinheit in besonders vorteilhafter Weise einfach realisieren, wobei ein Austreten aus der Gehäuseflanscheinheit vermieden wird und auf die Anordnung von zusätzlichen Dichtungen verzichtet werden kann.

Eine bevorzugte Ausgestaltung der Erfindung besteht darin, dass die Wanddicke g zwischen 2 und 3 mm liegt. Bevorzugt ist dabei eine Wanddicke g von 2,5 mm. Auf diese Weise lässt sich eine weitere Gewichtseinsparung auf einfachem Wege realisieren.

Gemäß einer weiteren bevorzugten Ausgestaltung der Erfindung ist vorgesehen, dass der Gehäuseflansch aus CuSn5Zn5Pb5-C besteht. Dieser Werkstoff ist nach DIN EN 1982 bezeichnet und wird auch unter der Werkstoff Nr. 2.1096 geführt. Eine verbreitete Kurzbezeichnung dieses Werkstoffes lautet Rg5. Dabei ist vorteilhaft, dass die Klappenwelle in dem ersten Lager und in dem zweiten Lager relativ problemlos drehbar gelagert werden kann, da man auf die Anordnung zusätzlicher Lagerteile, wie beispielsweise Lagerbuchsen oder -hülsen, verzichten kann.

Nach einer weiteren Ausgestaltung der Erfindung ist vorgesehen, dass der Gehäuseflansch abweichende Massenanteilsbereiche von Sn im Bereich von 2 bis 8 %, von Zn im Bereich von 1 bis 10 % und von Pb im Bereich von 1 bis 5 % aufweist. Diese Werkstoffe eignen sich besonders vorteilhaft als Werkstoff für den Gehäuseflansch, wobei eine relativ hohe Korrosionsbeständigkeit der Gehäuseflanscheinheit für viele Einsatzzwecke gegeben ist.

Gemäß einer weiteren bevorzugten Ausgestaltung der Erfindung wird die Klappenwelle in dem ersten Lager und in dem zweiten Lager ohne zusätzliche Dichtung drehbar gelagert. Auf die Anordnung von zusätzlichen Dichtungen kann verzichtet werden, da aufgrund der geringeren Wärmeausdehnungskoeffizienten auch bei schwankenden Temperaturen der durch die Gehäuseflanscheinheit zu leitenden Gase ein Verklemmen der Klappenwelle im Gehäuseflansch vermieden werden kann. Ein nachteiliger Austritt von Gasen über die Lager der Klappenwelle ins Freie wird dabei zusätzlich wirkungsvoll vermieden.

Nach einer weiteren Ausgestaltung der Erfindung ist vorgesehen, dass die Klappenwelle zum ersten Lager und zum zweiten Lager einen Spalt von 0,018 bis 0,025 mm aufweist. Bei Temperaturen über 700 °C hat sich dabei ein Spalt von 0,020 mm besonders bewährt. Als Spalt ist dabei der Abstand zwischen der Klappenwelle und der Innenwand des ersten Lagers bzw. des zweiten Lagers (Toleranz) zu verstehen. Dadurch wird eine relativ hohe Dichtwirkung für Gase erzielt.

Die Erfindung wird nachfolgenden anhand der Zeichnung (Fig.) näher beispielhaft erläutert.
- Fig.: zeigt die Gehäuseflanscheinheit im Querschnitt zusammen mit dem Stellantrieb.

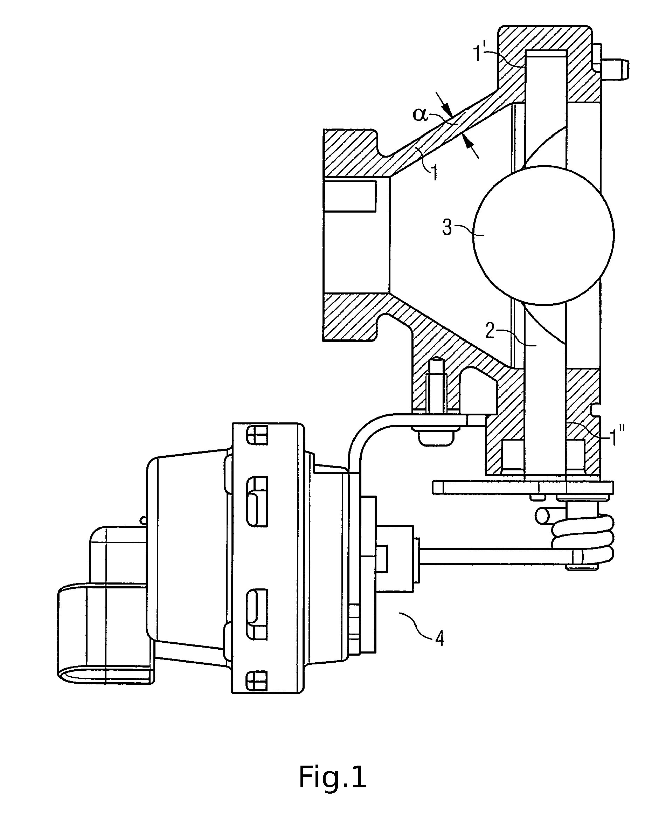

In Fig. 1 ist die Gehäuseflanscheinheit zusammen mit dem Stellantrieb 4 im Querschnitt vereinfacht und schematisch dargestellt. Die Gehäuseflanscheinheit besteht aus einem Gehäuseflansch 1, in dem senkrecht zur Längsachse des Gehäuseflansches 1 eine Klappenwelle 2 mit einer mittig angeordneten Klappe 3 in einem ersten Lager 1' und einem zweiten Lager 1'' drehbar gelagert ist. Der Gehäuseflansch 1 besteht aus Rotguss und weist eine Wanddicke g von 2 bis 4 mm auf. Das am zweiten Lager 1'' positionierte Ende der Klappenwelle 2 ist mit dem Stellantrieb 4 verbunden. Durch den Stellantrieb 4 kann die Klappenwelle 3 in eine Drehbewegung versetzt und die Klappe 3 in entsprechender Weise in ihrer Position verändert werden. Eine Anordnung von zusätzlichen Dichtungen in dem ersten Lager 1' oder in dem zweiten Lager 1'' ist in vorteilhafter Weise nicht vorgesehen. Die dargestellte Gehäuseflanscheinheit eignet sich besonders als Verschlusseinheit für einen Gaskühler für Abgas eines Kraftfahrzeuges.

## Patentansprüche

1. Verschlusseinheit für Abgas eines Kraftfahrzeuges mit einer Gehäuseflanscheinheit, die aus einem Gehäuseflansch (1) besteht, in dem senkrecht zur Längsachse des Gehäuseflansches (1) eine Klappenwelle (2) mit einer mittig angeordneten Klappe (3) in einem ersten Lager (1') und einem zweiten Lager (1'') drehbar gelagert ist, **dadurch gekennzeichnet, dass** der Gehäuseflansch (1) aus Rotguss besteht und eine Wanddicke g von 2 bis 4 mm aufweist.

2. Verschlusseinheit nach Anspruch 1, **dadurch gekennzeichnet, dass** die Wanddicke g zwischen 2 und 3 mm liegt.

3. Verschlusseinheit nach Anspruch 1 oder Anspruch 2, **dadurch gekennzeichnet, dass** der Gehäuseflansch aus CuSn5Zn5Pb5-C besteht.

4. Verschlusseinheit nach Anspruch 3, **dadurch gekennzeichnet, dass** der Gehäuseflansch (1) abweichende Massenanteilsbereiche von Sn im Bereich von 2 bis 8 %, von Zn im Bereich von 1 bis 10 % und von Pb im Bereich von 1 bis 5 % aufweist.

5. Verschlusseinheit nach einem der Ansprüche 1 bis 4, **dadurch gekennzeichnet, dass** die Klappenwelle (2) in dem ersten Lager (1') und in dem zweiten Lager (1'') ohne zusätzliche Dichtung drehbar gelagert ist.

6. Verschlusseinheit nach Anspruch 5, **dadurch gekennzeichnet, dass** die Klappenwelle (2) zum ersten Lager (1') und zum zweiten Lager (1'') einen Spalt von 0,018 bis 0,025 mm aufweist.

## Claims

1. Sealing unit for exhaust gas from a motor vehicle having a housing flange unit which comprises a housing flange (1) in which, perpendicular to the longitudinal axis of the housing flange (1), a throttle shaft (2) having a centrally arranged throttle (3) is mounted rotatably in a first bearing (1') and a second bearing (1"), **characterized in that** the housing flange (1) consists of red brass and has a wall thickness g of 2 to 4 mm.

2. Sealing unit according to Claim 1, **characterized in that** the wall thickness g is between 2 and 3 mm.

3. Sealing unit according to Claim 1 or Claim 2, **characterized in that** the housing flange consists of CuSn5Zn5Pb5-C.

4. Sealing unit according to Claim 3, **characterized in that** the housing flange (1) has differing percentage by mass areas of Sn in the range of from 2 to 8%, of Zn in the range of from 1 to 10% and of Pb in the range of from 1 to 5%.

5. Sealing unit according to one of Claims 1 to 4, **characterized in that** the throttle shaft (2) is mounted rotatably in the first bearing (1') and in the second bearing (1") without an additional seal.

6. Sealing unit according to Claim 5, **characterized in that** the throttle shaft (2) has a gap of from 0.018 to 0.025 mm from the first bearing (1') and from the second bearing (1").

## Revendications

1. Ensemble d'obturation pour gaz d'échappement dans un véhicule automobile, comportant un ensemble à bride formant boîtier, qui se compose d'une bride (1) formant boîtier, dans laquelle un arbre (2) de volet d'obturation, sur lequel est fixé en son centre, un volet d'obturation (3), est monté en rotation, perpendiculairement à l'axe longitudinal de la bride (1) formant boîtier, dans un premier palier (1') et dans un deuxième palier (1"), **caractérisé par le fait que** la bride (1) formant boîtier est en bronze rouge et a une paroi d'une épaisseur g de 2 à 4 mm.

2. Ensemble d'obturation selon la revendication 1, **caractérisé par le fait que** l'épaisseur g de la paroi se situe entre 2 et 3 mm.

3. Ensemble d'obturation selon la revendication 1 ou la revendication 2, **caractérisé par le fait que** la bride formant boîtier est en CuSn5Zn5Pb5-C.

4. Ensemble d'obturation selon la revendication 3, **caractérisé par le fait que** la bride formant boîtier a des pourcentages en masse divergents qui se situent dans une plage de 2 à 8 % pour le Sn, dans une plage de 1 à 10 % pour le Zn et dans une plage de 1 à 5 % pour le Pb.

5. Ensemble d'obturation selon l'une des revendications 1 à 4, **caractérisé par le fait que** l'arbre (2) du volet d'obturation est monté en rotation sans joint supplémentaire dans le premier palier (1') et dans le deuxième palier (1").

6. Ensemble d'obturation selon la revendication 5, **caractérisé par le fait que** l'arbre (2) du volet d'obturation a un jeu de 0,018 à 0,025 mm par rapport au premier palier (1') et au deuxième palier (1").
